# FASCICULE DE BREVET EUROPEEN

(11) **EP 0 595 712 B1**
(45) Date de publication et mention de la délivrance du brevet: **03.07.1996**
(21) Numéro de dépôt: 93402629.5
(22) Date de dépôt: 26.10.1993
(51) Int. Cl.: B60K 28/04, B60K 28/12, F16D 48/06, F16D 48/10

(54) **Procédé de protection contre les démarrages intempestifs d'un véhicule automobile**
Verfahren zum Schutz gegen ungewolltes Anfahren eines Fahrzeuges
Method for protection against sudden start-up of a motor vehicle

(30) Priorité: 26.10.1992 FR 9212734
(43) Date de publication de la demande: 04.05.1994
(73) Titulaire: VALEO, 75848 Paris Cédex 17 (FR)
(72) Inventeur: Grunberg, Pierre, F-75019 Paris (FR)
(74) Mandataire: Gamonal, Didier

(56) Documents cités:
- FR-A- 1 132 678
- FR-A- 2 429 357
- FR-A- 2 609 562
- US-A- 2 740 947
- US-A- 5 094 332
- US-A- 5 109 945
- PATENT ABSTRACTS OF JAPAN vol. 5, no. 112 (M-79)(784) 21 Juillet 1981 & JP-A-56 053 927 (YAMAHA HATSUDOKI K.K.) 13 Mai 1981

## Description

La présente invention concerne un procédé de protection contre les démarrages intempestifs d'un véhicule automobile à moteur et à commande automatique de démarrage, dont la mise en route est pilotée par un module électronique à programme de démarrage recevant sur ses entrées des signaux représentatifs des paramètres de fonctionnement du véhicule, tels que la position du levier de vitesses, la position de la pédale d'accélérateur et la vitesse de rotation du moteur.

On a décrit dans les documents FR-A-2 609 562 et DE-A-2500330 des procédés de commande d'un embrayage à actionnement motorisé de véhicule automobile à moteur à combustion interne.

Dans le document FR-A-2 609 562 (définissant les caractéristiques du préambule de la revendication 1) ledit module élabore également un signal d'alarme et l'adresse à un moyen de signalisation du véhicule.

Dans ces documents, l'embrayage est à actionnement automatique en étant commandé à partir de moyens moteurs, dont la mise en route est pilotée par un module électronique à programme de démarrage et recevant sur ses entrées des signaux comme mentionnés ci-dessus.

Dans ces types de réalisations, lorsque le véhicule est arrêté et que le moteur tourne, l'embrayage est débrayé et l'on peut engager ainsi un rapport de transmission. Si le conducteur accélère il initialise alors le programme de démarrage et le véhicule démarre. En effet, il est usuellement prévu des dispositions, qui ne permettent le démarrage du véhicule, notamment, que lorsque l'on exerce une action sur la pédale d'accélérateur.

Il se pose alors un problème de sécurité car si le conducteur quitte sa place avec un rapport de boîte engagé, il est possible de provoquer un accident grave en ouvrant le capot du moteur et en actionnant la manette des gaz reliée à la pédale d'accélérateur ; un démarrage intempestif du véhicule étant alors possible.

Il en est de même lorsque le véhicule est arrêté moteur tournant, par exemple, sur une aire de stationnement avec un rapport de boîte engagé, le conducteur ayant quitté le véhicule.

En effet la réaction d'enfants étant imprévisible, il se peut que ceux-ci, présents dans le véhicule, viennent actionner malencontreusement la pédale d'accélérateur, ce qui pourrait entraîner un démarrage du véhicule. Il en est de même lorsqu'un animal est à bord du véhicule.

La présente invention a pour objet d'offrir une sécurité optimale contre les démarrages intempestifs du véhicule à moteur et à commande automatique de démarrage.

Suivant l'invention un procédé contre les démarrages intempestifs d'un véhicule automobile à moteur et à commande automatique de démarrage défini par les caractéristiques du préambule de la revendication 1 est caractérisé en ce qu'il consiste :
- à doter le module électronique d'une mémoire d'inhibition du programme de démarrage,
- à activer ladite mémoire à l'aide de signaux provenant simultanément, d'une part, d'un capteur d'absence repérant une absence au moins présumée du conducteur et, d'autre part, du levier de vitesses dans une position correspondante à un rapport de transmission engagé,
- à créer, par l'intermédiaire de la mémoire activée, une interdiction du programme de démarrage pour interdire le démarrage du véhicule,
- à actionner, à partir de ladite mémoire activée, une alarme par élaboration du signal d'alarme et adressage au moyen de signalisation du véhicule,
- à effacer ladite interdiction et ladite alarme mémorisées au moyen d'un signal provenant du changement d'état du levier de vitesses par remise au point mort de celui-ci.

Ainsi une protection contre les démarrages intempestifs du véhicule à n'importe quel rapport de boîte engagé en l'absence du conducteur est réalisée. Par exemple, le capteur d'absence peut être constitué par le capteur d'ouverture des portières ou par un capteur associé à la ceinture de sécurité et détectant le bouclage de celle-ci. Il peut s'agir également d'un capteur détectant l'ouverture du capot moteur.

Ainsi lorsque par exemple le capteur d'absence est associé à l'ouverture des portières, la fonction démarrage du véhicule est interdite, avec activation acoustique associée ou autre, dès que la portière du véhicule a été ouverte avec un rapport engagé. Dès cet instant cette alarme et l'interdiction associée sont mémorisées et, même après fermeture de la portière, ne pourront s'effacer que si le conducteur remet le levier de vitesses au point mort.

Tant que le levier de vitesses n'est pas au point mort, il est impossible de faire démarrer accidentellement le véhicule en manoeuvrant, après ouverture du capot moteur, le volet des gaz après avoir quitté ledit véhicule avec un rapport engagé, même si la portière a été refermée entre-temps.

On appréciera que les changements de vitesses ne sont pas interdits, en effet, la mémoire d'inhibition n'agit que sur le programme de démarrage, le conducteur étant supposé présent une fois que le véhicule a démarré en sorte que le capteur d'absence n'émet pas de signal.

La description qui va suivre illustre l'invention en regard des dessins annexés dans lesquels :
- la figure 1 est une vue en perspective d'un moteur à combustion interne avec un système d'asservissement électronique de la commande d'embrayage selon l'invention ;
- la figure 2 est une vue de l'intérieur de l'actionneur électromécanique de la figure 1 ;
- la figure 3 est une vue en coupe axiale de l'embrayage de la figure 1 ;
- la figure 4 est une vue d'un ordinogramme du fonctionnement de la mémoire d'inhibition selon l'invention.

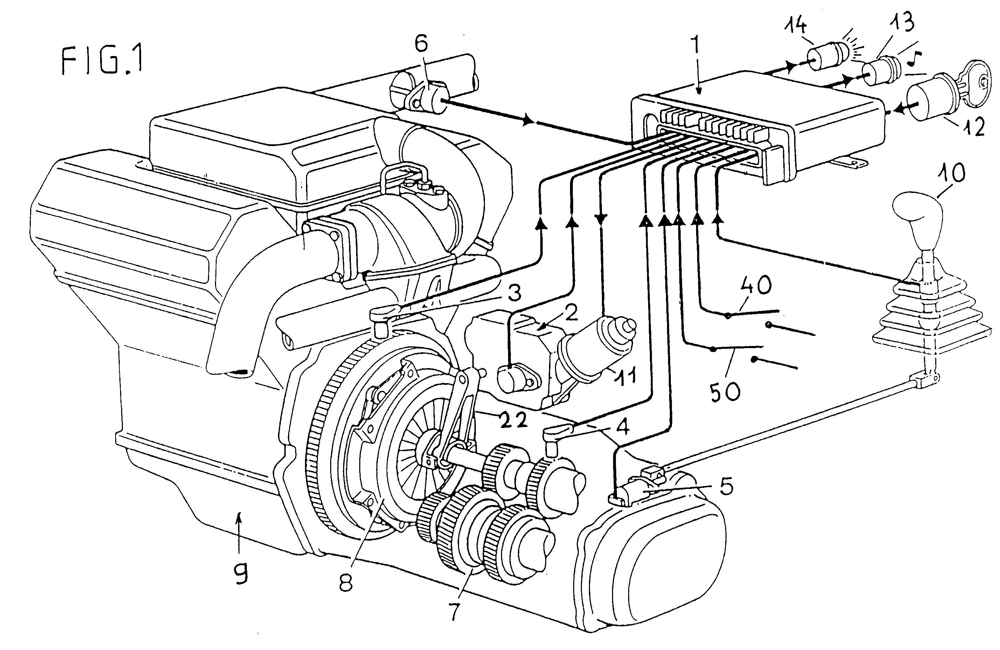

A la figure 1 est illustré un système d'asservissement électronique de la commande d'embrayage d'un véhicule automobile à moteur à combustion interne 9, doté d'une boîte de transmission à rapports de transmission, ici une boîte de vitesses manuelle 7 à rapports de boîte de vitesses.

Ce système comporte, pour piloter la manoeuvre d'un embrayage à disque de friction 8, un module électronique 1, un actionneur électromécanique 2, un capteur 3 de la vitesse de rotation du moteur à combustion interne 9, un capteur 4 de vitesse de rotation de l'arbre primaire de la boîte de vitesses manuelle 7, un capteur 5 de déplacement du levier de vitesses 10, un capteur 6 de la position du volet des gaz, qui est une image de la position de la pédale d'accélérateur commandant ledit volet.

Le module électronique 1 est alimenté électriquement à partir de la batterie du véhicule, tout comme le moteur électrique 11 de l'actionneur 2.

Ce module 1, doté d'un microcalculateur, reçoit sur ses entrées des informations, sous forme de signaux, représentatives de paramètres de fonctionnement du véhicule. Ces signaux proviennent des capteurs 3,4,5,6, ainsi que de signaux du levier de vitesses 10 établissant des contacts électriques lorsqu'il est manoeuvré par le pilote ou conducteur pour engager un rapport de boîte de vitesses (1ère, 2ème, marche arrière etc.)

Ce module reçoit également un signal représentatif de la position de la butée de débrayage 35. Ce signal est prélevé sur un potentiomètre porté par le carter fixe de l'actionneur 2 et comportant un organe de manoeuvre solidaire d'une roue dentée 27 décrite ci-après.

Les lignes électriques correspondantes sont représentées en traits forts à la figure 1.

Pour mémoire on rappellera grâce à ce système, dénommé usuellement embrayage électronique, que l'on obtient un excellent confort et un agrément de conduite optimal à partir d'une boîte de vitesses classique, en rendant transparente pour le pilote la fonction mécanique d'embrayage-débrayage.

Plus précisément, l'embrayage 8 est à actionnement automatique en étant commandé à partir de moyens moteurs, ici l'actionneur 2, dont la mise en route est pilotée par le module 1 comportant un programme de démarrage pour la mise en route du véhicule.

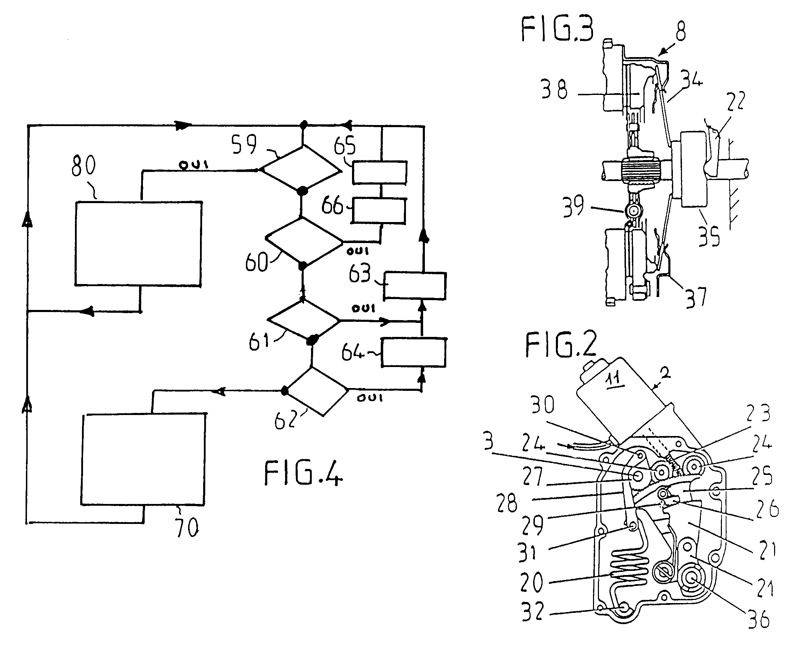

Le rôle de l'actionneur électromécanique est de combiner (figure 2) l'action du moteur électrique 11 et du ressort de traction 20 sur le levier 21 en deux parties, dont l'une est clavetée sur l'axe 36 de la fourchette d'embrayage 22.

Les parties du levier 21 sont articulées l'une sur l'autre comme décrit dans le document FR-A-2 564 921 auquel on se reportera pour plus de précisions.

L'arbe fileté 23 du moteur 11 entraîne dans les deux sens les deux pignons à double denture 24, lesquels déplacent le secteur denté 25 grâce au basculeur denté 26. Le ressort 20 est fixé, d'une part, en 32 au carter fixe de l'actionneur 2 et, d'autre part, en 31 à deux fourches de renvoi ou biellettes 28 montées de part et d'autre d'une roue dentée 27 engrenant avec le secteur denté 25. Ces fourches 28 sont montées à articulation en 30 sur la roue 27. Si la ligne de liaison, constituée par les points 30,31,32, passe par l'axe d'articulation 33 de la roue 27 il y a arc-boutement et le ressort 20, bien que bandé au maximum, ne fait pas tourner la roue 27.

Le secteur 25 reste alors immobile tandis que l'embrayage est en position embrayé. Dès que la ligne 30,31,32 s'écarte du point 33, du fait que le moteur 11 à légèrement déplacé les pièces 27,25, le ressort tend à faire tourner la roue 27 sous l'effet d'un couple variable égal au produit de la force du ressort 20 par le bras de levier correspondant à la distance de la ligne 30,31,32 au point 33.

Ce couple s'ajoute au couple du moteur 11 pour combattre la poussée du diaphragme 34 de l'embrayage 8, par l'intermédiaire de la fourchette 22 et de la butée 35 agissant sur l'extrémité des doigts du diaphragme 34 pour la manoeuvre de celui-ci. L'embrayage passe alors de la position embrayée à la position débrayée, le basculeur 26, initialement soulevé par contact avec le point fixe 29, venant en prise avec la partie dentée du levier 21.

Ainsi (figure 3) le diaphragme 34, monté à articulation sur le couvercle 37 de l'embrayage 8 rapporté sur le volant du moteur 9, pivote et cesse d'exercer une pression sur le plateau de pression 38, en sorte que les garnitures du disque de friction 39, solidaires de l'arbre d'entrée de la boîte de vitesses 7, sont libérées et l'embrayage désengagé. Pour embrayer, on effectue la manoeuvre inverse.

Grâce à l'actionneur 2, l'effort fournit par le moteur électrique 11 pour manoeuvrer l'embrayage dans les deux sens est très faible et est fonction des programmes générés par le module 1.

Ce module de pilotage 1 de l'actionneur 2 est, tel que décrit par exemple dans le document FR-A-2 609 562 auquel on pourra se reporter, agencé autour d'un microcalculateur qui, grâce à un logiciel adapté, est susceptible de générer toutes les impulsions de commande correspondant aux différentes configurations de manoeuvre d'embrayage et de débrayage.

Ce microcalculateur délivre, par exemple, un signal impulsionnel à l'entrée d'un étage de puissance capable d'appliquer des impulsions de courant (dans un sens ou dans l'autre, selon que l'on effectue une course de débrayage ou d'embrayage) aux enroulements du moteur électrique 11.

Ces impulsions sont fonctions notamment d'un programme de démarrage que comporte le microcalculateur pour faire démarrer le véhicule. D'autres programmes sont également prévus, lorsque le véhicule roule, pour effectuer dans différentes situations les changements de rapports de boîtes. Ces programmes seront dénommés par la suite programme de roulage et de changement de vitesses.

Usuellement le véhicule ne démarre que lorsqu'une vitesse est engagée (rapport de boîte engagé) avec simultanément une action sur la pédale de débrayage.

Le module électronique 1 est propre également à élaborer par l'intermédiaire de son microcalculateur un signal d'alarme et à l'adresser à au moins un moyen de signalisation du véhicule 14,13. La clé de contact 12 est associée au module électronique 1.

Un démarrage intempestif du véhicule est alors possible lorsque le conducteur quitte sa place avec un rapport de boite engagé et que par exemple il ouvre le capot pour actionner la manette des gaz et donc le volet des gaz, dont le mouvement est détecté par le capteur 6, tel qu'un switch ou autre, envoyant un signal au microcalculateur.

En même temps le moteur voit son nombre de tours augmenter.

En vue d'offrir une sécurité optimale contre tous démarrages intempestifs en l'absence du conducteur, la présente invention propose un procédé de protection contre les démarrages intempestifs d'un véhicule automobile à moteur 9 et à commande automatique de démarrage, dont la mise en route est pilotée par un module électronique 1 à programme de démarrage recevant sur ses entrées des signaux représentatifs des paramètres de fonctionnement du véhicule, tels que la position du levier de vitesses 10, la position de la pédale d'accélérateur et la vitesse de rotation du moteur 9, ledit module électronique 1 étant propre à élaborer un signal d'alarme et à l'adresser à au moins un signal de signalisation 14,13 du véhicule, ce procédé étant caractérisé en ce qu'il consiste :
- à doter le module électronique 1 d'une mémoire d'inhibition du programme de démarrage
- à activer ladite mémoire à l'aide de signaux provenant simultanément, d'une part, d'un capteur d'absence repérant une absence au moins présumée du conducteur et, d'autre part, du levier de vitesses dans une position correspondante à un rapport de transmission engagé
- à créer, par l'intermédiaire de la mémoire activée, une interdiction du programme de démarrage pour interdire le démarrage du véhicule
- à actionner, à partir de ladite mémoire activée, une alarme par élaboration du signal d'alarme et adressage au moyen de signalisation du véhicule
- à effacer ladite interdiction et ladite alarme mémorisées au moyen d'un signal provenant du changement d'état du levier de vitesses par remise au point mort de celui-ci.

Ici le logiciel du microcalculateur est conformé pour tenir compte de ladite mémoire d'inhibition et exécuter lesdites interdiction, alarme et effacement.

A la figure 1, les capteurs d'absence portent la référence 40 et 50. Le capteur 40 est ici le capteur associé à la portière, ici l'interrupteur de portière permettant d'allumer le plafonnier lorsque la porte est ouverte. Le capteur 50 est un interrupteur qui se ferme lorsque le capot du moteur est ouvert.

On notera que le capteur 40 repère une absence au moins présumée du conducteur. En effet celui-ci peut rester à bord du véhicule en ouvrant la portière.

Le capteur 50 est également un capteur d'absence présumée, le conducteur pouvant rester à bord, tandis qu'un autre passager ouvre le capot moteur.

On appréciera que la présence de ces deux capteurs 40,50 évite tous les incidents possibles. Une protection contre les démarrages intempestifs du véhicule étant également réalisée pour le passager non conducteur, lorsque, le conducteur étant à bord, ledit passager ouvre le capot moteur pour actionner la manette des gaz.

En se reportant à l'organigramme de la figure 4, on voit que la fonction de démarrage du véhicule est impossible dès que la portière du conducteur a été ouverte avec une vitesse engagée. Dans ce cas, le microcalculateur élabore un signal d'alarme et l'adresse ici à un buzzer 13 monté sur le module 1, ainsi qu'éventuellement à une lampe témoin 14 portée par le module 1.

Ici ce buzzer 13 et cette lampe 14 sont spécifiques à l'embrayage et à la mémoire d'inhibition. On peut envisager en variante d'utiliser des moyens de signalisation existant sur le véhicule.

A la figure 4, on voit que la mémoire d'inhibition consiste en une bascule informatique. Plus précisément dans le bloc de test 60, véhicule arrêté, on détecte la position du levier 10. Si celui-ci n'est pas au point mort, on détecte dans le bloc de test 61 l'état de la bascule. Si celle-ci est active alors on continue à actionner l'alarme par l'intermédiaire du bloc de traitement 63. Cela se produit notamment lorsque le conducteur remonte à bord - alarme activée - sans repasser par le point mort. Si la bascule n'est pas active, on vérifie dans le bloc de test 62 l'état du capteur d'absence (ceinture de sécurité bouclée - porte fermée...). Si ce capteur n'est pas actif alors on effectue le programme de démarrage 70 et l'on envoie une information pour mettre en route l'actionneur 2. Dans le cas contraire, on interdit le programme de démarrage 70 et on envoie une information dans le bloc de traitement 64 pour activer la bascule puis l'alarme (bloc 63).

Lorsque le conducteur remonte à bord, dès qu'il repasse au point mort, on envoie à partir du bloc 60 une information dans les blocs de traitement 65,66 montés en cascade pour respectivement stopper l'alarme (bloc 65) et remettre (bloc 66) la bascule en position inactive.

Lorsque le véhicule roule, le bloc test 59 envoie une information dans le programme de roulage et de changement de vitesses 80 pour effectuer ledit programme. Dans le cas contraire, véhicule à l'arrêt, on effectue les séquences précédentes avec intervention ou non de la mémoire d'inhibition, les blocs 59 envoyant alors une information dans le bloc 60.

En variante on peut se servir de la ceinture de sécurité, certains véhicules étant pourvus d'un capteur, tel qu'un interrupteur, détectant le décrochage et le bouclage de la ceinture de sécurité avec allumage d'une lampe témoin, lorsque la ceinture n'est pas bouclée. Dans ce cas, l'absence présumée du conducteur est détectée à partir du décrochage de la ceinture de sécurité.

Dans tous les cas, on ne peut redémarrer qu'après avoir manoeuvré le levier 10 avec passage au point mort.

Ainsi, lorsque le conducteur remonte à bord et remet la vitesse au point mort, le véhicule ne pourra redémarrer que si la portière est fermée. En effet s'il repasse de nouveau en première ou en marche arrière (rapport de boite engagé) avec la porte ouverte ou le capot ouvert, le véhicule ne pourra redémarrer car la mémoire d'inhibition aura été à nouveau réactivée, ainsi que l'alarme.

Bien entendu la présente invention est seulement limitée par la portée des revendications est ne se limite pas à l'exemple de réalisation décrit. En particulier, les moyens moteurs commandant l'embrayage 8 peuvent être du type électrohydraulique comme décrit dans le document DE-A-25 00 330, avec un servo-cylindre et une électrovalve.

Bien entendu le véhicule peut être à moteur électrique ou être du type hybride à moteur électrique et moteur thermique, avec une boite de transmission différente, par exemple, comportant une transmission à courroie et poulie variables. Dans tous les cas, le véhicule est à moteur et à commande automatique de démarrage, dont la mise en route est pilotée par un module électronique à programme de démarrage et recevant sur ses entrées des signaux représentatifs de paramètres de fonctionnement comme décrits ci-dessus.

Le capteur d'absence peut être un capteur, tel qu'un interrupteur, associé au siège du conducteur, qui émet un signal dès que le conducteur quitte son siège. Ce capteur détecte donc une présence réelle du conducteur. En variante on peut utiliser d'autres capteurs que la présence réelle du conducteur.

On appréciera que l'utilisation d'un capteur d'absence présumée du conducteur est bénéfique, car l'on détecte également les oublis du conducteur (ceinture non bouclée - portière ou capot moteur non fermé) en empêchant le véhicule de démarrer dès qu'un rapport de boite est engagé.

On notera que le fait de repasser au point mort est une manoeuvre non naturelle mais réalisable aisément, le conducteur effectuant sa propre éducation.

Néanmoins, en même temps que l'alarme, on peut adresser un message au conducteur à l'aide d'un afficheur pour l'inviter à repasser au point mort, ledit afficheur appartenant au moyen de signalisation.

## Revendications

1. Procédé de protection contre les démarrages intempestifs d'un véhicule automobile à moteur (9) et à commande automatique de démarrage, dont la mise en route est pilotée par un module électronique (1) à programme de démarrage (70) recevant sur ses entrées des signaux représentatifs des paramètres de fonctionnement du véhicule tels que la position du levier de vitesses (10), la position de la pédale d'accélérateur et la vitesse de rotation du moteur, ledit module électronique (1) étant propre à élaborer un signal d'alarme (63) et à l'adresser à au moins un moyen de signalisation (14,13) du véhicule, caractérisé en ce qu'il consiste :
- à doter le module électronique (1) d'une mémoire d'inhibition du programme de démarrage (70),
- à activer ladite mémoire à l'aide de signaux provenant simultanément, d'une part, d'un capteur d'absence (40,50) repérant une absence au moins présumée du conducteur et, d'autre part, du levier de vitesses (10) dans une position correspondante à un rapport de transmission engagé (64),
- à créer, par l'intermédiaire de la mémoire activée, une interdiction du programme de démarrage (70) pour interdire le démarrage du véhicule (60,61,62,64),
- à actionner, à partir de ladite mémoire activée, une alarme par élaboration du signal d'alarme et adressage au moyen de signalisation du véhicule (63),
- à effacer ladite interdiction et ladite alarme mémorisées au moyen d'un signal provenant du changement d'état du levier de vitesses (10) par remise au point mort de celui-ci (60,66,65).

2. Procédé selon la revendication 1, caractérisé en ce que le capteur d'absence (40,50) est un capteur d'absence présumée du conducteur.

3. Procédé selon la revendication 2, caractérisé en ce que le capteur d'absence (40) est un capteur, tel qu'un interrupteur, associé à l'ouverture de la portière.

4. Procédé selon la revendication 2, caractérisé en ce que le capteur d'absence (40) est un capteur détectant le décrochage de la ceinture de sécurité.

5. Procédé selon l'une quelconque des revendications 2 à 4, caractérisé en ce que le capteur d'absence (50) est un capteur, tel qu'un interrupteur, associé à l'ouverture du capot moteur.

6. Procédé selon l'une quelconque des revendications 1 à 5, caractérisé en ce que le moyen de signalisation (13,14) est spécifique à la mémoire d'inhibition.

7. Procédé selon l'une quelconque des revendications 1 à 6, caractérisé en ce que la mémoire d'inhibition consiste en une bascule informatique.

8. Procédé selon l'une des revendications 1 à 7, caractérisé en ce que le moyen de signalisation comporte un buzzer (13).

9. Procédé selon l'une quelconque des revendications 1 à 8, caractérisé en ce que le moyen de signalisation comporte un afficheur pour inviter le conducteur à repasser au point mort.

## Claims

1. A method for protection against accidental starting of a motor vehicle having an engine (9) with automatic control of starting, in which activation of the starter is governed by an electronic module (1) with a starting programme (70), which receives on its inputs signals representing operating parameters of the vehicle such as the position of the gear change lever (10), the position of the accelerator pedal and the speed of rotation of the engine, the said electronic module (1) being adapted to generate an alarm signal (63) and to address it to at least one warning means (14, 13) of the vehicle, characterised in that it consists in:
- providing the electronic module (1) with a memory for inhibition of the starting programme (70),
- activating the said memory by means of signals derived simultaneously, firstly, from an absence sensor (40, 50) for marking at least a presumed absence of the driver, and, secondly, from the gear change lever (10) in a position corresponding to a gear being engaged (64),
- establishing, through the activated memory, a prohibition of the starting programme (70) so as to prohibit starting of the vehicle (60, 61, 62, 64),
- activating, from the said activated memory, an alarm by generating the alarm signal and addressing the visual warning means of the vehicle (63),
- cancelling the said memorised prohibition and the said memorised alarm, by means of a signal derived from the change of state of the gear change lever (10) by reversion to the neutral state of the latter (60, 66, 65).

2. A method according to Claim 1, characterised in that the absence sensor (40, 50) is a sensor for sensing the presumed absence of the driver.

3. A method according to Claim 2, characterised in that the absence sensor (40) is a sensor, such as an interruptor, which is associated with opening of the door.

4. A method according to Claim 2, characterised in that the absence sensor (40) is a sensor for detecting unlocking of the safety belt.

5. A method according to any one of Claims 2 to 4, characterised in that the absence sensor (50) is a sensor, such as an interruptor, which is associated with opening of the bonnet of the engine compartment.

6. A method according to any one of Claims 1 to 5, characterised in that the warning means (13, 14) is specific to the prohibition memory.

7. A method according to any one of Claims 1 to 6, characterised in that the prohibition memory consists of an information flip-flop.

8. A method according to one of Claims 1 to 7, characterised in that the warning means comprises a buzzer (13).

9. A method according to any one of Claims 1 to 8, characterised in that the warning means comprises an indicator for inviting the driver to revert to neutral.

## Patentansprüche

1. Verfahren zum Schutz gegen ungewolltes Anfahren eines Kraftfahrzeugs, das mit einem Motor (9) und mit einer Steuerung zum Anfahren ausgestattet ist und dessen Ingangsetzen von einem elektronischen Modul (1) mit einem Programm zum Anfahren (70) gesteuert wird, wobei das Modul im Eingang charakteristische Signale der Funktionsparameter des Fahrzeugs, wie die Position des Gangschalthebels (10), die Position des Gaspedals und die Drehgeschwindigkeit des Motors empfängt, wobei das elektronische Modul (1) dazu geeignet ist, ein Alarmsignal (63) zu veranlassen und es an wenigstens ein Signalisationsmittel (14, 13) des Fahrzeugs weiterzugeben, **dadurch gekennzeichnet**,
daß es folgendes umfaßt:
- das elektronische Modul (1) mit einem Speicher zum Aussetzen des Programms zum Anfahren (70) zu versehen,
- das Aktivieren des Speichers mit Hilfe von Signalen, die simultan einerseits von einem Sensor zum Erfassen der Abwesenheit (40,50), der eine zumindest angenommene Abwesenheit des Fahrers feststellt und andererseits vom Gangschalthebel (10) in einer entsprechenden Position bei eingerücktem Gang (64) kommen,
- über den aktivierten Speicher eine Sperre des Anfahrprogramms (70) herzustellen, um das Anfahren des Fahrzeugs (60, 61, 62, 64) zu verhindern,
- von dem aktivierten Speicher aus einen Alarm durch veranlassen des Alarmsignals zu aktivieren und diesen an das Signalisationsmittel des Fahrzeugs zu richten (63),
- die gespeicherte Sperre und den gespeicherten Alarm mit Hilfe eines Signals zu löschen, das von der Zustandsänderung des Gangschalthebels (10) stammt, indem dieser in seine Leerlaufstellung (60, 66, 65) zurückgeführt wird.

2. Verfahren nach Anspruch 1, **dadurch gekennzeichnet**, daß der Sensor zum Erfassen der Abwesenheit (40, 50) ein Sensor für eine angenommene Abwesenheit des Fahrers ist.

3. Verfahren nach Anspruch 2, **dadurch gekennzeichnet**, daß der Sensor zur Erfassung der Abwesenheit (40) ein Sensor so wie ein Unterbrecher ist, der der Öffnung der Tür zugeordnet ist.

4. Verfahren nach Anspruch 2, **dadurch gekennzeichnet**, daß der Sensor zur Erfassung der Abwesenheit (40) ein Sensor ist, der das Öffnen des Sicherheitsgurtes erfaßt.

5. Verfahren nach einem der Ansprüche 2 bis 4, **dadurch gekennzeichnet**, daß der Sensor zur Erfassung der Abwesenheit (50) ein Sensor die ein Unterbrecher ist, der der Öffnung der Motorhaube zugeordnet ist.

6. Verfahren nach einem der Ansprüche 1 bis 5, **dadurch gekennzeichnet**, daß das Signalisationsmittel (13, 14) spezifisch für den Speicher zum Aussetzen ist.

7. Verfahren nach einem der Ansprüche 1 bis 6, **dadurch gekennzeichnet**, daß der Speicher zum Aussetzen eine Kippschaltung umfaßt.

8. Verfahren nach einem der Ansprüche 1 bis 7, **dadurch gekennzeichnet**, daß das Signalisationsmittel eine Hupe (13) umfaßt.

9. Verfahren nach einem der Ansprüche 1 bis 8, **dadurch gekennzeichnet**, daß das Signalisationsmittel ein Anzeigegerät umfaßt, um den Fahrer dazu aufzufordern, in den Leerlauf zurückzugehen.
